# EUROPEAN PATENT APPLICATION

(11) **EP 4 763 932 A1**
(43) Date of publication of application: **24.06.2026**
(21) Application number: 24220912.0
(22) Date of filing: 18.12.2024
(51) Int. Cl.: C09J 4/06

(54) **UV STABILITY OF ACRYLATE REACTIVE RESIN**

(71) Applicant: Hilti Aktiengesellschaft, 9494 Schaan (LI)
(72) Inventor: Toikka, Gary, 87509 Immenstadt (DE); Bornschlegl, Alexander, 81245 München (DE)
(74) Representative: Hilti Aktiengesellschaft Corporate Intellectual Property

(57) **Abstract**

Present invention relates to a UV-stabilized reactive resin system comprising carbon black particles. Present invention also relates to a two-component reactive resin system for use with bonded screws anchors comprising component (A) comprising the UV-stabilized reaction resin system according to the present invention and component (B) comprising a curing agent. Further, present invention relates to a use of carbon black particles to improve UV stability of the reactive resin system by prolonging gelling and hardening times in comparison to reactive resin systems without UV stabilizers. Finally, present invention relates to a use of a two-component reaction resin system for fastening and/or reinforcing bonded screw anchors in solid substances, in particular in stone or concrete.

## Description

Two-component fast cure mortar systems are widely used in construction due to their rapid setting times and ease of application. These systems typically consist of an acrylic/methacrylic resin (Component A) and an organic peroxide (Component B), which, when mixed, undergo radical polymerization to form a solid construction material within a short period, usually around one minute. This quick curing process is particularly beneficial for applications requiring immediate load-bearing capacity.

A significant challenge in the development of these mortar systems is preventing the premature polymerization of the acrylic/methacrylic resin within its storage capsule or foil pack. Exposure to UV light can initiate radical formation, leading to unwanted polymerization before the resin is used. Therefore, it is crucial to protect the reactive resin from UV exposure to ensure its stability and effectiveness.

Conventional polymeric multilayered foils used for encapsulating the mortar components have been found insufficient in blocking UV light. While adding a metal layer, such as aluminum, to the foil can provide the necessary UV protection, this solution introduces manufacturing complexities. The production of small capsules with metal layers involves intricate bending and welding processes, which can damage the metal layer and compromise the capsule's integrity.

Addressing these challenges is essential for improving the reliability and performance of two-component fast cure mortar systems. Innovations in encapsulation methods that offer effective UV protection without complicating the manufacturing process are highly sought after in the industry. These advancements would ensure the stability of the acrylic resin until use, enhancing the overall efficiency and dependability of the mortar systems.

Carbon black is commonly used as a UV stabilizer or protector in the manufacture of inexpensive thermoplastic parts. In acrylic liquid phases, such as paints, it is typically added to provide color (WO20178105 A1) and/or to improve dispersion properties, including the appearance of the cured film (US2021206982 AA) and printing inks (WO22079414 A1).

It was surprisingly found that UV induced polymerization in acrylic/methacrylic resins contained in thin polymer foils can be prevented or significantly reduced by using carbon black particles in the formulation.

The object of the present invention is to provide a UV-stabilized reactive resin system which can be used in a two-component reaction resin system for bonded screws anchors in stone or concrete. This allows for the extension of the product's shelf life when exposed to UV light during its storage or use on site.

The problem is solved by the UV-stabilized reactive resin system according to claim 1.

Present invention relates to a UV-stabilized reactive resin system comprising a radically curable reaction resin, wherein the radically curable reaction resin is a compound based on urethane (meth)acrylate, epoxy (meth)acrylate, a (meth)acrylate of an alkoxylated bisphenol or based on further ethylenically unsaturated compounds, and further comprising carbon black particles.

It is preferred that the UV-stabilized reactive resin system comprises carbon black particles in the amount in the range of from 0.001 to 5 weight %, more preferably 0.005 to 2 weight %, more preferably 0.007 to 1.5 weight %, more preferably 0.01 to 1 weight % based on the total weight of the UV-stabilized reactive resin system.

In principle, it is possible to use any size or shape of the carbon black particles for the purposes of the present invention. It is preferred that carbon black particles have the size in the range of from 10 to 500 nm in diameter, more preferably in the range of from 10 to 100 nm in diameter. Carbon black particles can form aggregates which vary and can be spheroidal, chain-like, fibrous, or grape-like morphologies.

According to the present invention the UV-stabilized reactive resin system comprises a radically curable reaction resin, wherein the radically curable reaction resin is a compound based on urethane (meth)acrylate, epoxy (meth)acrylate, a (meth)acrylate of an alkoxylated bisphenol or based on further ethylenically unsaturated compounds. Of these compounds, the group of ethylenically unsaturated compounds is preferred, which group comprises styrene and derivatives thereof, (meth)acrylates, vinyl esters, unsaturated polyesters, vinyl ethers, allyl ethers, itaconates, dicyclopentadiene compounds and unsaturated fats, of which unsaturated polyester resins and vinyl ester resins are particularly suitable and are described, for example, in applications EP 1 935 860 A1, DE 195 31 649 A1, WO 02/051903 A1 and WO 10/108939 A1. Vinyl ester resins (synonym: (meth)acrylate resins) are in this case most preferred due to the hydrolytic resistance and excellent mechanical properties thereof. Vinyl ester urethane resins, in particular urethane methacrylates, are very particularly preferred. These include, as preferred resins, the urethane methacrylate resins described in DE 10 2011 017 626 B4. In this regard, DE 10 2011 017 626 B4, and above all its description of the composition of these resins, in particular in the examples of DE 10 2011 017 626 B4, is hereby incorporated by reference.

Examples of suitable unsaturated polyesters which can be used according to the invention are divided into the following categories, as classified by M. Malik et al. in J. M. S. - Rev. Macromol. Chem. Phys., C40 (2 and 3), p.139-165 (2000):
(1) ortho-resins: these are based on phthalic anhydride, maleic anhydride or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol A;
(2) iso-resins: these are prepared from isophthalic acid, maleic anhydride or fumaric acid and glycols. These resins can contain higher proportions of reactive diluents than the ortho resins;
(3) bisphenol A fumarates: these are based on ethoxylated bisphenol A and fumaric acid;
(4) HET acid resins (hexachloroendomethylene tetrahydrophthalic acid resins): these are resins obtained from chlorine/bromine-containing anhydrides or phenols during the preparation of unsaturated polyester resins.

In addition to these resin classes, what are referred to as dicyclopentadiene resins (DCPD resins) can also be distinguished as unsaturated polyester resins. The class of DCPD resins is either obtained by modifying one of the above-mentioned resin types by means of a Diels-Alder reaction with cyclopentadiene, or said resins are alternatively obtained by means of a first reaction of a dicarboxylic acid, for example maleic acid, with dicyclopentadienyl and then by means of a second reaction of the usual preparation of an unsaturated polyester resin, the latter being referred to as a DCPD maleate resin.

The unsaturated polyester resin preferably has a molecular weight Mn in the range of 500 to 10,000 daltons, more preferably in the range of 500 to 5,000 and even more preferably in the range of 750 to 4,000 (according to ISO 13885-1). The unsaturated polyester resin has an acid value in the range of 0 to 80 mg KOH/g resin, preferably in the range of 5 to 70 mg KOH/g resin (according to ISO 2114-2000). If a DCPD resin is used as the unsaturated polyester resin, the acid value is preferably 0 to 50 mg KOH/g resin.

In the context of the invention, vinyl ester resins are oligomers, prepolymers or polymers having at least one (meth)acrylate end group, what are referred to as (meth)acrylate-functionalized resins, which also include urethane (meth)acrylate resins and epoxy (meth)acrylates.

Vinyl ester resins, which have unsaturated groups only in the end position, are obtained, for example, by reacting epoxy oligomers or polymers (for example bisphenol A digylcidyl ether, phenol novolac-type epoxies or epoxy oligomers based on tetrabromobisphenol A) with (meth)acrylic acid or (meth)acrylamide, for example. Preferred vinyl ester resins are (meth)acrylate-functionalized resins and resins which are obtained by reacting epoxy oligomers or polymers with methacrylic acid or methacrylamide, preferably with methacrylic acid, and optionally with a chain extender, such as diethylene glycol or dipropylene glycol. Examples of such compounds are known from applications US 3 297 745 A, US 3 772 404 A, US 4 618 658 A, GB 2 217 722 A1, DE 37 44 390 A1 and DE 41 31 457 A1.

Particularly suitable and preferred vinyl ester resins are (meth)acrylate-functionalized resins, which are obtained, for example, by reacting difunctional and/or higher-functional isocyanates with suitable acrylic compounds, optionally with the help of hydroxy compounds that contain at least two hydroxyl groups, as described for example in DE 3940309 A1. Very particularly suitable and preferred are the urethane methacrylate resins (which are also referred to as vinyl ester urethane resins) described in DE 10 2011 017 626 B4, the composition of which is incorporated herein by reference.

Aliphatic (cyclic or linear) and/or aromatic difunctional or higher functional isocyanates or prepolymers thereof can be used as isocyanates. The use of such compounds serves to increase the wettability and thus to improve the adhesive properties. Aromatic difunctional or higher functional isocyanates or prepolymers thereof are preferred, aromatic difunctional or higher functional prepolymers being particularly preferred. Toluylene diisocyanate (TDI), diisocyanatodiphenylmethane (MDI) and polymeric diisocyanatodiphenylmethane (pMDI) for increasing chain stiffening, and hexane diisocyanate (HDI) and isophorone diisocyanate (IPDI), which improve flexibility, may be mentioned, of which polymeric diisocyanatodiphenylmethane (pMDI) is very particularly preferred.

Suitable acrylic compounds are acrylic acid and acrylic acids substituted on the hydrocarbon group, such as methacrylic acid, hydroxyl-containing esters of acrylic or methacrylic acid with polyhydric alcohols, pentaerythritol tri(meth)acrylate, glycerol di(meth)acrylate, such as trimethylolpropane di(meth)acrylate or neopentyl glycol mono(meth)acrylate. Acrylic or methacrylic acid hydroxyalkyl esters, such as hydroxyethyl (meth)acrylate, hydroxypropyl (meth)acrylate, polyoxyethylene (meth)acrylate, polyoxypropylene (meth)acrylate, are preferred, especially since such compounds serve to sterically prevent the saponification reaction. Acrylic acid is less preferred because of its lower alkali stability than acrylic acids substituted on the hydrocarbon group.

Hydroxy compounds that can optionally be used are suitable dihydric or higher alcohols, for example secondary products of ethylene or propylene oxide, such as ethanediol, di- or triethylene glycol, propanediol, dipropylene glycol, other diols, such as 1,4-butanediol, 1,6-hexanediol, neopentyl glycol, diethanolamine, further bisphenol A or F or the ethoxylation/propoxylation and/or hydrogenation or halogenation products thereof, higher alcohols such as glycerol, trimethylolpropane, hexanetriol and pentaerythritol, hydroxyl-containing polyethers, for example oligomers of aliphatic or aromatic oxiranes and/or higher cyclic ethers, such as ethylene oxide, propylene oxide, styrene oxide and furan, polyethers which contain aromatic structural units in the main chain, such as those of bisphenol A or F, hydroxyl group-containing polyesters based on the above-mentioned alcohols or polyethers and dicarboxylic acids or the anhydrides thereof, such as adipic acid, phthalic acid, tetra- or hexahydrophthalic acid, heteric acid, maleic acid, fumaric acid, itaconic acid, sebacic acid and the like. Particularly preferred are hydroxy compounds having aromatic structural units to reinforce the chain of the resin, hydroxy compounds containing unsaturated structural units, such as fumaric acid, to increase the crosslinking density, branched or star-shaped hydroxy compounds, in particular trihydric or higher alcohols and/or polyethers or polyesters containing the structural units thereof, branched or star-shaped urethane (meth)acrylates to achieve lower viscosity of the resins or their solutions in reactive diluents and higher reactivity and crosslinking density.

The vinyl ester resin preferably has a molecular weight Mn in the range of 500 to 3,000 daltons, more preferably 500 to 1,500 daltons (according to ISO 13885-1). The vinyl ester resin has an acid value in the range of 0 to 50 mg KOH/g resin, preferably in the range of 0 to 30 mg KOH/g resin (according to ISO 2114-2000).

All of these reaction resins that can be used according to the invention as radically curable compounds can be modified according to methods known to a person skilled in the art, for example to achieve lower acid numbers, hydroxide numbers or anhydride numbers, or can be made more flexible by introducing flexible units into the backbone, and the like.

In addition, the radically curable reaction resin may contain other reactive groups that can be polymerized with a radical initiator, such as peroxides, for example reactive groups derived from itaconic acid, citraconic acid and allylic groups and the like.

It is preferred that the UV-stabilized reactive resin system comprises at least one accelerator and/or at least one inhibitor.

The purpose of the at least one accelerator is to accelerate the hardening of the reactive resin.

Suitable accelerators are known to a person skilled in the art. These are expediently amines.

Suitable amines are selected from the following compounds, which are described in application US 2011071234 A1, for example: Dimethylamine, trimethylamine, ethylamine, diethylamine, triethylamine, n-propylamine, di-n-propylamine, tri-n-propylamine, iso-propylamine, di-iso-propylamine, tri-iso-propylamine, n-butylamine, iso-butylamine, tert-butylamine, di-n-butylamine, di-iso-butylamine, tri-iso-butylamine, pentylamine, iso-pentylamine, di-iso-pentylamine, hexylamine, octylamine, dodecylamine, laurylamine, stearylamine, aminoethanol, diethanolamine, triethanolamine, aminohexanol, ethoxyaminoethane, dimethyl(2-chloroethyl)amine, 2-ethylhexylamine, bis(2-chloroethyl)amine, 2-ethylhexylamine, bis(2-ethylhexyl)amine, N-methylstearylamine, dialkylamines, ethylenediamine, N,N'-dimethylethylenediamine, tetramethylethylenediamine, diethylenetriamine, permethyldiethylenetriamine, triethylenetetramine, tetraethylenepentamine, 1,2-diaminopropane, dipropylenetriamine, tripropylenetetramine, 1,4-diaminobutane, 1,6-diaminohexane, 4-amino-1-diethylaminopentane, 2,5-diamino-2,5-dimethylhexane, trimethylhexamethylenediamine, N,N-dimethylaminoethanol, 2-(2-diethylaminoethoxy)ethanol, bis(2-hydroxyethyl)oleylamine, tris[2(2-hydroxyethoxy)ethyl]amine, 3-amino-1-propanol, methyl(3-aminopropyl)ether, ethyl-(3-aminopropyl)ether, 1,4-butanediol-bis(3-aminopropyl ether), 3-dimethylamino-1-propanol, 1-amino-2-propanol, 1-diethylamino-2-propanol, di-iso-propanolamine, methyl-bis(2-hydroxypropyl)amine, tris(2-hydroxypropyl)amine, 4-amino-2-butanol, 2-amino-2-methylpropanol, 2-amino-2-methylpropanediol, 2-amino-2-hydroxymethylpropanediol, 5-diethylamino-2-pentanone, 3-methylaminopropionitrile, 6-aminohexanoic acid, 11-aminoundecanoic acid, 6-aminohexanoic acid ethyl ester, 11-aminohexanoate-isopropyl ester, cyclohexylamine, N-methylcyclohexylamine, N,N-dimethylcyclohexylamine, dicyclohexylamine, N-ethylcyclohexylamine, N-(2-hydroxyethyl)cyclohexylamine, N,N-bis(2-hydroxyethyl)cyclohexylamine, N-(3-aminopropyl)cyclohexylamine, aminomethylcyclohexane, hexahydrotoluidine, hexahydrobenzylamine, aniline, N-methylaniline, N,N-dimethylaniline, N,N-diethylaniline, N,N-di-propylaniline, iso-butylaniline, toluidine, diphenylamine, hydroxyethylaniline, bis(hydroxyethyl)aniline, chloroaniline, aminophenols, aminobenzoic acids and esters thereof, benzylamine, dibenzylamine, tribenzylamine, methyldibenzylamine, α-phenylethylamine, xylidine, di-iso-propylaniline, dodecylaniline, aminonaphthalene, N-methylaminonaphthalene, N,N-dimethylaminonaphthalene, N,N-dibenzylnaphthalene, diaminocyclohexane, 4,4'-diamino-dicyclohexylmethane, diamino-dimethyl-dicyclohexylmethane, phenylenediamine, xylylenediamine, diaminobiphenyl, naphthalenediamines, benzidines, 2,2-bis(aminophenyl)propane, aminoanisoles, aminothiophenols, aminodiphenyl ethers, aminocresols, morpholine, N-methylmorpholine, N-phenylmorpholine, hydroxyethylmorpholine, N-methylpyrrolidine, pyrrolidine, piperidine, hydroxyethylpiperidine, pyrroles, pyridines, quinolines, indoles, indolenines, carbazoles, pyrazoles, imidazoles, thiazoles, pyrimidines, quinoxalines, aminomorpholine, dimorpholineethane, [2,2,2]-diazabicyclooctane and N,N-dimethyl-p-toluidine.

Preferred amines are aniline and toluidine derivatives and N,N-bisalkylarylamines, such as N,N-dimethylaniline, N,N-diethylaniline, N,N-dimethyl-p-toluidine, N,N-bis(hydroxyalkyl)arylamine, N,N-bis(2-hydroxyethyl)aniline, N,N-bis(2-hydroxyethyl)toluidine, N, N-bis(2-hydroxypropyl)aniline, N,N-bis(2-hydroxypropyl)toluidine, N,N-bis(3-methacryloyl-2-hydroxypropyl)-p-toluidine, N,N-dibutoxyhydroxypropyl-p-toluidine and 4,4'-bis(dimethylamino)diphenylmethane.

Polymeric amines, such as those obtained by polycondensation of N,N-bis(hydroxyalkyl)aniline with dicarboxylic acids or by polyaddition of ethylene oxide and these amines, are also suitable as accelerators.

Preferred accelerators are N,N-bis(2-hydroxypropyl) toluidine, N,N-bis(2-hydroxyethyl) toluidine and *para*-toluidine ethoxylate (Bisomer^{®} PTE).

The accelerator can be contained in the UV-stabilized reactive resin system in an amount of 0 to 10 weight %, preferably 0.01 to 5 weight %, particularly preferably 0.5 to 3 weight %, based on the total weight of the UV-stabilized reactive resin system.

In yet another embodiment, the UV-stabilized reactive resin system according to the invention also contains an inhibitor both for the storage stability and for setting the gel time. The inhibitor can be contained in the UV-stabilized reactive resin system alone or together with the accelerator. A suitably coordinated accelerator-inhibitor combination is preferably used to set the processing time or gel time.

The inhibitors which are conventionally used for radically polymerizable compounds, as are known to a person skilled in the art, are suitable as inhibitors. The inhibitors are preferably selected from phenolic compounds and non-phenolic compounds, such as stable radicals and/or phenothiazines.

Phenols, such as 2-methoxyphenol, 4-methoxyphenol, 2,6-di-tert-butyl-4-methylphenol, 2,4-di-tert-butylphenol, 2,6-di-tert-butylphenol, 2,4-dimethyl-6-tert-butylphenol, 2,4,6-trimethylphenol, 2,4,6-tris(dimethylaminomethyl)phenol, 4,4'-thio-bis(3-methyl-6-tert-butylphenol), 4,4'-isopropylidenediphenol, 6,6'-di-tert-butyl-4,4'-bis(2,6-di-tert-butylphenol), 1,3,5-trimethyl-2,4,6-tris(3,5-di-tert-butyl-4-hydroxybenzyl)benzene, 2,2'-methylene-di-p-cresol, pyrocatechol and butylpyrocatechols such as 4-tert-butylpyrocatechol, 4,6-di-tert-butylpyrocatechol, hydroquinones such as hydroquinone, 2-methylhydroquinone, 2-tert-butylhydroquinone, 2,5-di-tert-butylhydroquinone, 2,6-di-tert-butylhydroquinone, 2,6-dimethylhydroquinone, 2,3,5-trimethylhydroquinone, benzoquinone, 2,3,5,6-tetrachloro-1,4-benzoquinone, methylbenzoquinone, 2,6-dimethylbenzoquinone, naphthoquinone, or mixtures of two or more thereof, are suitable as phenolic inhibitors.

Phenothiazines such as phenothiazine and/or derivatives or combinations thereof, or stable organic radicals such as galvinoxyl and N-oxyl radicals, are considered as non-phenolic or anaerobic inhibitors, i.e. inhibitors that are effective even without oxygen, in contrast to the phenolic inhibitors.

Examples of N-oxyl radicals which can be used are those described in DE 199 56 509. Suitable stable N-oxyl radicals (nitroxyl radicals) can be selected from 1-oxyl-2,2,6,6-tetramethylpiperidine, 1-oxyl-2,2,6,6-tetramethylpiperidin-4-ol (also referred to as TEMPOL), 1-oxyl-2,2,6,6-tetramethylpiperidin-4-one (also referred to as TEMPON), 1-oxyl-2,2,6,6-tetramethyl-4-carboxy-piperidine (also referred to as 4-carboxy-TEMPO), 1-oxyl-2,2,5,5-tetramethylpyrrolidine, 1-oxyl-2,2,5,5-tetramethyl-3-carboxylpyrrolidine (also referred to as 3-carboxy-PROXYL), aluminum-N-nitrosophenylhydroxylamine, and diethylhydroxylamine. Further suitable N-oxyl compounds are oximes, such as acetaldoxime, acetone oxime, methyl ethyl ketoxime, salicyloxime, benzoxime, glyoximes, dimethylglyoxime, acetone-O-(benzyloxycarbonyl) oxime and the like.

These compounds are particularly expedient and usually necessary, because otherwise the desired storage stability of preferably more than 3 months, in particular 6 months or more, cannot be achieved. UV stability and in particular storage stability can thus be increased considerably.

Furthermore, pyrimidinol or pyridinol compounds substituted in para-position to the hydroxyl group, as described in patent DE 10 2011 077 248 B1, can be used as inhibitors.

Preferred inhibitors are 1-oxyl-2,2,6,6-tetramethylpiperidine (TEMPO) and 1-oxyl-2,2,6,6-tetramethylpiperidin-4-ol (TEMPOL), catechols, particularly preferably *tert*-butylpyrocatechol and Brenzk; the desired properties are achieved by means of the functional group (compared to the reactive diluents otherwise used), BHT and phenothiazine.

The inhibitors can be used either alone or as a combination of two or more thereof, depending on the desired properties of the UV-stabilized reactive resin system. The combination of the phenolic and the non-phenolic inhibitors allows a synergistic effect, as is also shown by the setting of a substantially drift-free setting of the gel time of the UV-stabilized reactive resin system.

The inhibitor can be contained in the UV-stabilized reactive resin system in an amount of 0 to 5 weight %, preferably 0.001 to 3 weight %, particularly preferably 0.01 to 1 weight %, based on the total amount of the UV-stabilized reactive resin system. If several inhibitors are contained, the amount just mentioned corresponds to the total amount of inhibitors.

It is preferred that the UV-stabilized reactive resin system comprises at least one reactive diluent. It is preferred that the at least one reactive diluent is a low-viscosity and radically polymerizable compound.

Suitable, in particular low-viscosity, radically curable compounds as reactive diluents are described in applications EP 1 935 860 A1 and DE 195 31 649 A1. The UV-stabilized reactive resin system preferably contains a (meth)acrylic acid ester as a reactive diluent, the following (meth)acrylic acid esters being particularly preferably used: hydroxyalkyl (meth)acrylates such as hydroxypropyl (meth)acrylate, 2-hydroxyethyl (meth)acrylate; alkanediol (meth)acrylates such as ethanediol-1,2-di(meth)acrylate, propanediol-1,3-di(meth)acrylate, butanediol-1,2-di(meth)acrylate, butanediol-1,3-di(meth) acrylate, butanediol-1,4-di(meth)acrylate, hexanediol-1,6-di(meth)acrylate, 2-ethylhexyl (meth)acrylate, phenylethyl (meth)acrylate, tetrahydrofurfuryl (meth)acrylate; trimethylolpropane tri(meth)acrylate; ethyl triglycol (meth)acrylate; N,N-dimethylaminoethyl (meth)acrylate; N,N-dimethylaminomethyl (meth)acrylate; acetoacetoxyethyl (meth)acrylate; alkylene (meth)acrylates such as ethylene and diethylene glycol di(meth)acrylate; oligo- and polyalkylene glycol di(meth)acrylates such as PEG200 di(meth)acrylate; methoxy polyethylene glycol mono(meth)acrylate; trimethylcyclohexyl (meth)acrylate; dicyclopentenyloxyethyl (meth)acrylate; tricyclopentadienyl di(meth)acrylate; dicyclopentenyloxyethyl crotonate; bisphenol A (meth)acrylate; novolac epoxy di(meth)acrylate; di-[(meth)acryloyl-maleoyl]-tricyclo-5.2.1.0.2.6 decane; 3-(meth)acryloyl-oxymethyl-tricylo-5.2.1.0.2.6 decane; 3-(meth)cyclopentadienyl (meth)acrylate; isobornyl (meth)acrylate; decalyl 2-(meth)acrylate; tetrahydrofurfuryl (meth)acrylate; and alkoxylated tri-, tetra- and pentamethylacrylates.

In principle, other conventional radically polymerizable compounds, alone or in a mixture with the (meth)acrylic acid esters described in the preceding paragraph, can also be used, e.g. styrene, α-methylstyrene, alkylated styrenes, such as tert-butylstyrene, divinylbenzene and vinyl and allyl compounds. Examples of vinyl or allyl compounds of this kind are hydroxybutyl vinyl ether, ethylene glycol divinyl ether, 1 ,4-butanediol divinyl ether, trimethylolpropane divinyl ether, trimethylolpropane trivinyl ether, mono-, di-, tri-, tetra- and polyalkylene glycol vinyl ether, mono-, di-, tri-, tetra- and polyalkylene glycol allyl ether, adipic acid divinyl ester, trimethylolpropane diallyl ether and trimethylolpropane triallyl ether.

Preferred reactive diluents are the further reactive diluents used in the examples.

The radically curable compound as described above can be contained in the UV-stabilized reactive resin system in an amount of 10 to 99.99 weight %, preferably 15 to 97 weight %, particularly preferably 20 to 65 weight %, based on the total weight of the UV-stabilized reactive resin system. The radically curable compound can be either a reaction resin based on a radically curable compound or a reactive diluent or a mixture of a reaction resin with two or more reactive diluents.

It is preferred that the amount of at least one reactive diluent is in the range of from 20 to 90 weight % based on the total weight of the UV-stabilize reactive resin system, more preferably in the range of from 55 to 75 weight %, more preferably in the range of from 60 to 70 weight %.

In case where the UV-stabilized reactive resin system comprises at least one reactive diluent, it is preferred that the total amount of the radically curable compound and at least one reactive diluent in in the range of from 10 to 99.99 weight %, more preferably 15 to 99 weight %, particularly preferably 30 to 98 weight %, based on the total weight of the UV-stabilized reactive resin system.

It is preferred that the UV-stabilized reactive resin system comprises at least one filler and/or rheology additive.

The fillers used are conventional fillers, preferably mineral or mineral-like fillers, such as quartz, glass, sand, quartz sand, quartz powder, porcelain, corundum, ceramics, talc, silicic acid (e.g. fumed silica), silicates, clay, titanium dioxide, chalk, barite, feldspar, basalt, aluminum hydroxide, granite or sandstone, polymeric fillers such as thermosets, hydraulically curable fillers such as gypsum, quicklime or cement (e.g. alumina cement or Portland cement), metals such as aluminum, carbon black, and also wood, mineral or organic fibers, or the like, or mixtures of two or more thereof, which can be added as a powder, in granular form or in the form of shaped bodies. The fillers may be present in any desired forms, for example as powder or flour, or as shaped bodies, for example in cylindrical, annular, spherical, platelet, rod, saddle or crystal form, or else in fibrous form (fibrillar fillers), and the corresponding base particles preferably have a maximum diameter of 10 mm. However, the globular, inert substances (spherical form) have a preferred and more pronounced reinforcing effect.

It is preferred that the UV-stabilized reactive resin system comprises at least one filler in an amount of 0 to 90 weight%, more preferably in the range of from 0.01 to 60 weight %, more preferably in the range of from 0.01 to 50 weight % based on the total weight of UV-stabilized reactive resin system.

Further conceivable additives are also rheology additives such as optionally organically after-treated fumed silica, bentonites, alkyl- and methylcelluloses, castor oil derivatives or the like, plasticizers such as phthalic or sebacic acid esters, stabilizers, antistatic agents, thickeners, flexibilizers, hardening catalysts, rheology aids, wetting agents, coloring additives such as dyes or in particular pigments, for example for different staining of components for improved control of their mixing, or the like, or mixtures of two or more thereof. Non-reactive diluents (solvents) can also be present, preferably in an amount of up to 30 weight %, based on the relevant component (UV-stabilized reactive resin system, reaction resin, hardener), for example from 1 to 20 weight %, such as low-alkyl ketones, e.g. acetone, di-low-alkyl low-alkanoyl amides such as dimethylacetamide, low-alkylbenzenes, such as xylenes or toluene, phthalic acid esters or paraffins, or water.

In an embodiment of the invention, in addition to the radically curable compound present, the UV-stabilized reactive resin system also contains a hydraulically setting or polycondensable inorganic compound, in particular cement. Such hybrid mortar systems are described in detail in DE 42 31 161 A1. In this case, the UV-stabilized reactive resin system preferably contains, as a hydraulically setting or polycondensable inorganic compound, cement, for example Portland cement or aluminate cement, with cements which are free of transition metal oxide or have a low level of transition metal being particularly preferred. Gypsum can also be used as a hydraulically setting inorganic compound as such or in a mixture with the cement. The UV-stabilized reactive resin system may also comprise silicatic, polycondensable compounds, in particular soluble, dissolved and/or amorphous-silica-containing substances such as fumed silica, as the polycondensable inorganic compound.

The hydraulically setting or polycondensable compound can be contained in the UV-stabilized reactive resin system in an amount of 0 to 30 weight %, more preferably 1 to 25 weight %, more preferably 5 to 20 weight %, based on the total weight of the UV-stabilized reactive resin system.

In another embodiment, if the viscosity and storage stability of the hardener composition (i.e. component (B)) are not adversely affected, the component (B) can also contain fillers and/or inorganic additives, the fillers and additives being the same as those just mentioned. Component (B) is described below in more detail.

In order to ensure fast and reliable mixing when using thread-forming screws and to ensure clean and safe handling when using thread-forming screws, it is necessary to keep the viscosity not only of the hardener component but also of the UV-stabilized reactive resin system (component (A)) as low as possible, but at the same time to allow a high viscosity of the mass after mixing the UV-stabilized reactive resin system (component (A)) and the hardener component (component (B)). This allows the screws to be set cleanly and safely without the risk of contaminating the user or the direct work environment.

In a particularly preferred embodiment, the UV-stabilized reactive resin system therefore contains an inorganic filler having hydrophilic properties.

Here, the surfaces in particular, but also the internal constituents of the fillers, can have hydrophilic properties. "Hydrophilic properties" means that the fillers interact with water or can react with water. This ensures that immediately after mixing the UV-stabilized reactive resin system (component (A)) and the water-containing hardener component, the resulting mass becomes so viscous that it becomes stable and thus no longer runs out of the borehole, which is particularly advantageous for overhead fixings or wall fixings. In particular, the surfaces of the inorganic fillers can be modified by means of hydrophilic coatings, primers or seals.

Examples of inorganic fillers having hydrophilic properties include those whose surface is treated with a hydrophilic surface treatment agent. Examples of such hydrophilic surface treatment agents include, inter alia, silane surface treatment agents, titanate surface treatment agents, aluminum surface treatment agents, zirconium aluminate surface treatment agents, Al₂O₃, TiO₂, ZrO₂, silicone and aluminum stearate, of which a silane surface treatment agent is preferred.

According to a further preferred embodiment of the UV-stabilized reactive resin system according to the present invention, the inorganic filler comprises minerals, selected from a group consisting of alkaline earth metals and the salts thereof, bentonite, carbonates, silicas, silica gel, salts of alkaline earth metals with silica and silicates, in particular silicas.

The inorganic filler can be produced by a dry method such as vapor deposition or combustion, or by a wet method such as precipitation. A commercially available product can also be used. Taking into account the rheological properties of the UV-stabilized reactive resin system, the hydrophilic inorganic filler is preferably a fine filler having a surface area of more than 80 m²/g, preferably more than 150 m²/g and more preferably between 150 and 400 m²/g.

According to a further preferred embodiment of the UV-stabilized reactive resin system according to the invention, the inorganic filler comprises a silicon oxide-based filler.

According to a further particularly preferred embodiment of the UV-stabilized reactive resin system according to the invention, the inorganic filler comprises a silica.

The silica is not limited to any particular type or its production. The silica can be a natural or a synthetic silica.

The silica is preferably an amorphous silica, which is selected from the group consisting of colloidal silica, wet-chemically produced silicas such as precipitated silicas, silica gels, silica sols, pyrogenic or thermally produced silicas, which are produced e.g. in an arc, plasma or by flame hydrolysis, silica smoke, silica glass (quartz glass), fused silica (fused quartz) and skeletons of radiolarians and diatoms in the form of kieselguhr.

The proportion of hydrophilic inorganic filler depends on the desired properties of the UV-stabilized reactive resin system. The hydrophilic inorganic filler is usually used in an amount of 0 to 15 weight %, preferably 0.1 to 10 weight % and particularly preferably in the range of 1 to 7 weight %, based in each case on the UV-stabilized reactive resin system, the total filler content being in the above-mentioned range, namely in the range from 0.01 to 90, in particular 0.01 to 60, especially 0.01 to 50 weight %, based on the UV-stabilized reactive resin system.

It is particularly preferred that the UV-stabilized reactive resin system does not comprise at least one filler and/or rheology additive. It is preferred that component (A) as described herewith does not comprises at least one filler and/or rheology additive and is therefore an unfilled system.

Present invention further relates to a two-component reaction resin system for use with bonded screws anchors comprising component (A) comprising the UV-stabilized reaction resin system according to any one of the embodiments as discloses herewith and component (B) comprising a curing agent.

In principle, any curing agent suitable for the hardening of the component (A) can be used.

In a preferred embodiment of component (B) according to the invention, said composition contains:
- at least one curing agent, which is a solid peroxide,
- water; and
- a rheology additive, preferably based on phyllosilicate.
In a preferred aspect of this first embodiment, the solid peroxide is suspended in the water.

It is preferred that component (B) contains:
- 2 to 50 weight %, preferably 5 to 45 weight %, particularly preferably 10 to 40 weight %, of the at least one curing agent, which is a peroxide, and
- 50 to 98 weight %, preferably 55 to 95 weight %, particularly preferably 60 to 90 weight %, water, and
- 0.15 to 5 weight %, preferably 1 to 3 weight %, of the rheology additive based on phyllosilicate.

It is preferred that the component (A) of the two-component reaction resin system is contained in a foil pack.

It is preferred that the foil pack comprises at least one layer, wherein at least one layer is selected from the group consisting of polyethylene (PE) foil layer, polypropylene (PP) foil layer, polyethylene terephthalate (PET) foil layer, polyamide (PA) foil layer, ethylene vinyl alcohol (EVOH) foil layer, paper layer, metal foil layer and combinations of two or more thereof.

It is particularly preferred that the foil pack comprises at least two foil layers, preferably at least two polyethylene (PE) foil layers as a composite. It is preferred that the composite foil consists of two polyethylene layers with an intermediate clear barrier layer, preferably made of ethylene vinyl alcohol. It is preferred that the foil pack comprises at least one ethylene vinyl alcohol (EVOH) foil layer and at least one metal, preferably aluminum, foil layer. It is preferred that the foil pack comprises hybrid coating layers such as the Fraunhofer ORMOCER-Coatings (organic modified ceramics). Such layers act as a barrier layer, but are not films/foils themselves.

It is preferred that the at least one layer, preferably all the layers, of the foil pack has a thickness in the range of from 25 µm to 200 µm, more preferably in the range of from 30 µm to 70 µm.

It is preferred that the foil has a print on the outside of the foil pack having a printing ink deposition in the range of from 0.25 g/m² to 2 g/m², preferably in the range of from 0.5 g/m² to 1.5 g/m², more preferably in the range of from 0.75 g/m² to 1.25 g/m².

In principle it can be any printing ink. It is preferred that the printing ink has some degree of opacity. Some preferred inks include, but are not limited to, solvent-based inks, water-based inks, UV-curable inks, polyurethane inks, and epoxy inks.

It is particularly preferred that the printing ink comprises titanium dioxide and/or carbon black.

It is preferred that the two-component reaction resin system is a chemical mortar for bonded screw anchors.

Present invention further relates to a use of carbon black particles to improve UV stability of the reactive resin system comprising a radically curable reaction resins, wherein the radically curable reaction resin is a compound based on urethane (meth)acrylate, epoxy (meth)acrylate, a (meth)acrylate of an alkoxylated bisphenol or based on further ethylenically unsaturated compounds, preferably further comprising other components selected from the group consisting of at least one reactive diluent, at least one accelerator, at least one inhibitor, at least one filler, at least one rheology additive, at least one additive, and combinations of two or more thereof, by prolonging gelling and hardening times in comparison to reactive resin systems without UV stabilizers.

Present invention also relates to a use of a two-component reaction resin system according to any one of the embodiments as disclosed herewith for fastening and/or reinforcing bonded screw anchors in solid substances, in particular in stone or concrete.

### EXAMPLES

Unless stated otherwise, all constituents of the compositions that are listed here are commercially available and were used in the usual commercial quality.

For all the experiments discussed herewith, UV stability has been measured under controlled conditions directly in a UV sun chamber (Q-Sun Xenon Test Chamber- Model: Xe-1). "Daylight" was simulated using a Daylight-Q filter with a cutoff wavelength of 295 nm. Power density was measured at 340 nm and was set to 0.4 Watts. Chamber temperature was kept constant at 40 °C.

**Table 1: Hours for gelling or hardening of the reactive resin component (A) (Mixture 1 as seen below) of the two-component foil pack for bonded screw anchors with different amounts of carbon black.**

| **Simulated "daylight" (340 nm)** | | |
|---|---|---|
| **Carbon black weight % in Mixture 1** | **Gelling (h)** | **Hard (h)** |
| 0.00 | 6 | 7 |
| 0.01 | 20 | 100 |
| 0.05 | 82 | 121 |
| 0.10 | 88 | 130 |
| 0.50 | n.o. | > 130 |
| 1.00 | n.o. | n.o. |

Gelling was indicated by a partial increase of the viscosity of the material inside the capsule. This is easily palpable by manual inspection against a reference Indicators for a starting gelation are a rubbery consistency, often only in some regions of the capsule. Hard refers to a fully cured composition. As references a sample stored in darkness and a fully cured capsule were used. For the first 12 hours the capsules were taken out of the Q-Sun tester once per hour and manually examined for gelling and hardening like described above. On the second and third day the procedure was done every two hours and from the fourth day on every 4 hours. Different amounts of carbon black (Pigment Black 6 aka Lamp Black 101 or Flammruss 101) were used and the time it would take reactive resin (component (A) of the two-component foil pack for bonded screw anchors) to gel or harden under simulated "Daylight" conditions. It was surprisingly found that addition of carbon black to the reactive resin component significantly increases gelling and full hardening time.

### Mixture 1:

Urethanemethacrylate resin: 33.77
BDDMA: 65
Tertiary amine accelerator: 1.2
Inhibitor TBC: 0.03
Total weight %: 100

### Mixture 2:

Urethanemethacrylate resin: 32.77
BDDMA: 63
Tertiary amine accelerator: 1.2
Inhibitor TBC: 0.03
Thickener (fumed silica): 3
Total weight %: 100

Urethanemethacrylate resin in Mixture 1 and 2 is UMA-121 prepared according to WO2019/007667, example C1: the resin was prepared and further used as a master batch in mixing with BDDMA in a mass ratio of 65/35
Examples for suited accelerators in the prior art section of: WO12164020
TBC: 4-tert-Butylcatechol CAS# 98-29-3

Mixture 2 was tested with different amounts of carbon black identical to Mixture 1 as discussed above and gave the same results as Mixture 1 of Table 1. Thus, both Mixture 1 and 2 demonstrated the same behavior with gelling and hardening, which shows that the addition of a thickening agent does not change the claimed effect.

### Experiments with Petri Dishes:

Borosilcate glass petri dishes (diameter 35mm, height 10mm) were filled with Mixture 1 to a filling height of 5mm. The petri dishes were covered with composite plastic films according to Table 2. The samples were then exposed to simulated daylight (Daylight-Q filter with a cutoff wavelength of 295 nm. Power density was measured at 340 nm and was set to 0.4 Watts. Chamber temperature was kept constant at 40 °C) and checked once daily for signs of gelation or curing over a period of 12 days. The sides of the petri dishes were covered with black cardboard to avoid stray light entering the test material.

**Table 2: Petri dish experiments**

| Examples | **Print (1g/m²)** | **Intermediate layer** | **Pigment black 6** | **gelling (time)** | **hard (time)** |
|---|---|---|---|---|---|
| R1 | N/A | N/A | N/A | 1 d | 2 d |
| R2 | Carbon black offset ink | N/A | N/A | 6 d | 8 d |
| R3 | Titanium white offset ink | N/A | N/A | 4 d | 5 d |
| R4 | N/A | Aluminum layer | N/A | Not observed | Not observed |
| E1 | N/A | N/A | 0.4 weight-% | 8 d | 11 d |
| E2 | Titanium white offset ink | N/A | 0.4 weight-% | Not observed | Not observed |

The composite foil used for the tests consisted of two polyethylene layers with an intermediate clear barrier layer (ethylene vinyl alcohol). The composite had an overall thickness of 50 µm.

For R4 an aluminum layer with a thickness of 10 µm was added to the composite. Printing on the foils (R2, R3 and E2) was done with IGT C1 Offset Proofer (IGT Testing Systems, The Netherlands) with a printing width of 50 mm and a printing ink deposition of 1.0 g/m².

The tests showed that the addition of Pigment Black 6 results in a better light stabilization than it is possible with a printing layer of realistic thickness. It also shows that the approach with Pigment Black 6 can be combined with a printed protection layer (E2) to achieve a result after 12 days of exposure that is similar to a fully opaque aluminum layer (which could be considered as the gold standard).

## Claims

1. A UV-stabilized reactive resin system comprising a radically curable reaction resin, wherein the radically curable reaction resin is a compound based on urethane (meth)acrylate, epoxy (meth)acrylate, a (meth)acrylate of an alkoxylated bisphenol or based on further ethylenically unsaturated compounds, and further comprising carbon black particles.

2. The UV-stabilized reactive resin system according to claim 1, wherein the amount of carbon black particles is in the range of from 0.001 to 5 weight %, preferably 0.005 to 2 weight %, more preferably 0.007 to 1.5 weight %, more preferably 0.01 to 1 weight % based on the total weight of the UV-stabilized reactive resin system.

3. The UV-stabilized reactive resin system according to claim 1 or 2, comprising at least one accelerator and/or at least one inhibitor.

4. The UV-stabilized reactive resin system according to any one of claims 1 to 3, comprising at least one reactive diluent.

5. The UV-stabilized reactive resin system according to any one of claims 1 to 4, comprising at least one filler and/or rheology additive.

6. A two-component reaction resin system for use with bonded screws anchors comprising component (A) comprising the UV-stabilized reaction resin system according to any one of claims 1 to 5 and component (B) comprising a curing agent.

7. The two-component reaction resin system according to claim 6, wherein the component (A) is contained in a foil pack.

8. The two-component reaction resin system according to claim 6 or 7, wherein the foil pack comprises at least one layer, wherein at least one layer is selected from the group consisting of polyethylene (PE) foil layer, polypropylene (PP) foil layer, polyethylene terephthalate (PET) foil layer, polyamide (PA) foil layer, ethylene vinyl alcohol (EVOH) foil layer, paper layer, metal foil layer and combinations of two or more thereof.

9. The two-component reaction resin system according to any one of claims 6 to 8, wherein the foil pack comprises at least two foil layers, preferably at least two polyethylene (PE) foil layers as a composite.

10. The two-component reaction resin system according to any one of claims 6 to 9, wherein the at least one layer of the foil pack has a thickness in the range of from 25 µm to 200 µm, more preferably in the range of from 30 µm to 70 µm.

11. The two-component reaction resin system according to any one of claims 6 to 10, wherein the foil has a print on the outside of the foil pack having a printing ink deposition in the range of from 0.25 g/m² to 2 g/m², preferably in the range of from 0.5 g/m² to 1.5 g/m², more preferably in the range of from 0.75 g/m² to 1.25 g/m².

12. A use of carbon black particles to improve UV stability of a reactive resin system comprising a radically curable reaction resin, wherein the radically curable reaction resin is a compound based on urethane (meth)acrylate, epoxy (meth)acrylate, a (meth)acrylate of an alkoxylated bisphenol or based on further ethylenically unsaturated compounds, preferably further comprising other components selected from the group consisting of at least one reactive diluent, at least one accelerator, at least one inhibitor, at least one filler, at least one rheology additive, at least one additive, and combinations of two or more thereof, by prolonging gelling and hardening times in comparison to reactive resin systems without UV stabilizers.

13. A use of a two-component reaction resin system according to any one of claims 6 to 12 for fastening and/or reinforcing bonded screw anchors in solid substances, in particular in stone or concrete.
